Europäisches Patentamt

European Patent Office

Office européen des brevets

(11) Veröffentlichungsnummer : **0 091 659**
**B1**

# EUROPÄISCHE PATENTSCHRIFT

(45) Veröffentlichungstag der Patentschrift :
05.03.86

(21) Anmeldenummer : 83103395.6

(22) Anmeldetag : 07.04.83

(51) Int. Cl.⁴ : **H 01 M 4/42**, C 22 C 1/04,
**B 22 F 9/04**

(54) Verfahren zur Herstellung von Zinkpulver für alkalische Batterien durch Amalgamieren von Zinkpulver.

(30) Priorität : 10.04.82 DE 3213386
10.04.82 DE 3213387

(43) Veröffentlichungstag der Anmeldung :
19.10.83 Patentblatt 83/42

(45) Bekanntmachung des Hinweises auf die Patenterteilung : 05.03.86 Patentblatt 86/10

(84) Benannte Vertragsstaaten :
AT BE CH DE FR GB IT LI LU NL SE

(56) Entgegenhaltungen :
FR-A- 1 574 748
FR-A- 2 381 394

(73) Patentinhaber : Grillo-Werke AG
Weseler Strasse 1
D-4100 Duisburg-Hamborn (DE)

(72) Erfinder : Glaeser, Wolfgang, Dr. Ing.
Siemensstrasse 29
D-3380 Goslar 1 (DE)

(74) Vertreter : Werner, Hans-Karsten, Dr. et al
Deichmannhaus am Hauptbahnhof
D-5000 Köln 1 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Gegenstand der vorliegenden Erfindung ist ein Verfahren zur Herstellung von Zinkpulver mit einem Quecksilbergehalt von insbesondere 0,1 bis 10 Gew.- %, wie es für alkalische Batterien benötigt wird durch Amalgamieren von Zinkpulver mit metallischem Quecksilber und Amalgamierhilfen.

Die Batterieeigenschaften werden durch Verunreinigungen des Zinks sowie der anderen Bestandteile der Batterien negativ beeinflußt. Verunreinigungen können im Zusammenhang mit Zink bewirken, daß dessen Überspannung herabgesetzt und somit die Auflösung des Zinks unter Wasserstoffentwicklung beschleunigt wird. Diese sog. Gasung des Zinks im alkalischen Elektrolyten führt einerseits zu Zinkverbrauch ohne elektrische Energieabgabe und andererseits durch Gasentwicklung zur Beeinträchtigung der Batterieeigenschaften, insbesondere zur Zerstörung der Batterie.

Zur Verminderung der Gasentwicklung, die durch die Herabsetzung der Überspannung von Zink durch Verunreinigungen verursacht wird, wird daher das Zink für alkalische Batterien amalgamiert. Die Amalgamierung des Zinkpulvers kann auf verschiedene Weise durchgeführt werden.

Aus der DE-OS 24 41 356 ist es bekannt, Zink mit dem gewünschten Quecksilbergehalt im Gasstrom zu pulverisieren. Hierzu wird das geschmolzene Zink mit Quecksilber homogen vermischt und die Schmelze im Gasstrom verdüst. Dieses Verfahren hat eine Reihe von Vorteilen. Der wichtigste Vorteil ist sicherlich, daß durch die Verteilung des Quecksilbers in der Schmelze sichergestellt wird, daß wirklich alle Pulverteilchen Quecksilber enthalten. Diese Verteilung des Quecksilbers im Volumen des Pulvers stellt jedoch auch einen Nachteil dar. Die Gasung wird nämlich ausschließlich durch Verunreinigungen an der Oberfläche der Pulverteilchen verursacht. Durch die Verteilung des Quecksilbers im Volumen der Pulverteilchen steht nur ein relativ geringer Teil des Quecksilbers an der Oberfläche der Pulverteilchen zur Passivierung der Verunreinigungen zur Verfügung.

Es ist deshalb nötig, bei diesem Verfahren mehr Quecksilber in das Zinkpulver einzubringen, als zur Passivierung der Verunreinigungen an der Oberfläche wirklich erforderlich wäre. Weiterhin werden Verunreinigungen, die erst nach der Bildung des Pulvers entstehen oder mit diesem in Kontakt kommen, durch die Amalgambildung nicht passiviert. Da die Gasung ein Oberflächeneffekt ist, tragen die kleinen Pulverteilchen mit relativ großer Oberfläche mehr zur Gasung bei als große Pulverteilchen. Die Passivierung der relativ großen Oberfläche kleiner Pulverteilchen benötigt relativ mehr Quecksilber als die Passivierung großer Teilchen. Beim Verdüsen einer Quecksilber-Zink-Legierung verdampft aus den entstehenden Pulverteilchen ein erheblicher Anteil des der Legierung zuzugebenen Quecksilbers. Es wurde gemessen, daß bis zu 10 % des Quecksilbers bei der Verdüsung den Pulverteilchen verlorengeht. Da die kleinen Pulverteilchen über relativ mehr Oberfläche verfügen als die großen Teilchen, ist der Quecksilberverlust der kleinen Teilchen relativ größer. Gerade die kleinen Teilchen benötigen jedoch an sich mehr Quecksilber als die großen.

Die Pulverisierung von Quecksilber-Zink-Legierungen im Gasstrom erfordert weiterhin erhebliche Schutzmaßnahmen zur Abtrennung des Quecksilbers aus der Verdüsungs-Prozeßluft. Schließlich ist ein weiterer wesentlicher Nachteil des Verfahrens die Tatsache, daß bei der Verdüsung ein erheblicher Anteil an Fehlkorn entsteht, welcher das relativ teurere Quecksilber enthält. Die Wiederverwendung, insbesondere das Wiedereinschmelzen des Feinkorns bereitet erhebliche Schwierigkeiten und stellt somit einen erheblichen Kostenfaktor dar.

Ein weiteres Verfahren zur Herstellung von Zinkpulver mit einem ausreichenden Quecksilbergehalt für alkalische Batterien besteht im nachträglichen Amalgamieren von reinem Zinkpulver. Bei diesem Verfahren behindert jedoch sowohl die Oxidbelegung des Zinkpulvers als auch die Quecksilbertröpfchen das Amalgamieren. Zinkpulver und Quecksilber können sich somit nur dann vollständig und einwandfrei miteinander umsetzen, wenn diese Oxidschichten abgebaut werden bzw. ihr Aufbau von vornherein verhindert wird.

Es ist bekannt, Zinkpulver im Elektrolyten der Batterie zu amalgamieren. Auch dieses Verfahren weist eine Reihe von Nachteilen auf. Einerseits behindert das Verdickungsmittel im Elektrolyten die gleichmäßige Durchmischung und damit die Amalgamierung. Wird andererseits die Amalgamierung im Elektrolyten ohne Verdickungsmittel durchgeführt, so behindert die Gegenwart des Zinkpulvers die gleichmäßige Verteilung des Verdickungsmittels. Außerdem kann diese Art des Amalgamierens nur unmittelbar vor der Batterieherstellung durchgeführt werden.

Wird das Amalgamieren des Zinkpulvers nicht im Elektrolyten, sondern unter Zusatz verdünnter Säure oder verdünnter Lauge durchgeführt, so muß diesem Prozeß eine gründliche Auswaschung folgen, da Spuren von Säure oder Lauge sich nachteilig auf den Batteriemechanismus auswirken können. Insbesondere wenn zum Amalgamieren nicht metallisches Quecksilber, sondern Quecksilber-Verbindungen eingesetzt werden, so müssen deren Anionen gründlichst ausgewaschen werden. Wird das Amalgamieren nicht bei den Batteriefabriken durchgeführt, so muß das amalgamierte Zinkpulver nach der Auswaschung für den Versand getrocknet werden. Hierbei treten verstärkt Probleme auf, die sich schon bei der Auswaschung nachteilig bemerkbar machen: Da für das Amalgamieren die Oxidbelegung der Zinkpulverteilchen abgebaut werden muß, reagiert das Zinkpulver spontan mit neutralem Wasser und der Trocknungsluft. Hierbei entstehen u. a. unkontrollierbare Oxidationen, die das Pulver für den Einsatz in den Batterien unbrauchbar machen können. Eine zu starke Oxidbelegung des Zinkpulvers senkt die elektrische Leitfähigkeit einer Zinkpulver enthaltenden Anode und führt zu hohem inneren Widerstand der Batterie.

Ein weiteres Problem nachträglich amalgamierten Zinkpulvers ist die Steuerung der Schüttdichte. Sie hängt in erheblichem Maße vom Quecksilbergehalt, der Korngröße, der Kornform und in bisher unkontrollierbarer Weise von sonstigen Verfahrensbedingungen ab.

Die vorliegende Erfindung hat sich die Aufgabe gestellt, ein verbessertes Verfahren zur Herstellung von Zinkpulver mit einem Quecksilbergehalt von 0,1 bis 10 Gew.-% für alkalische Batterien durch Amalgamieren von Zinkpulver mit metallischem Quecksilber und Amalgamierhilfen zu entwickeln. Dieses Verfahren soll die oben genannten Nachteile gemäß Stand der Technik vermeiden und zuverlässig, kontrollierbar und preiswert zu einem Produkt hoher Qualität führen.

Diese Aufgabe wird überraschend dadurch gelöst, daß man das Zinkpulver unter Rühren in einem geschlossenen System, in dem der Sauerstoffpartialdruck kleiner als 100 mbar, vorzugsweise kleiner als 20 mbar ist, mit Amalgamierhilfen und metallischem Quecksilber reagieren läßt, den Überschuß an Amalgamierhilfen, ihre flüchtigen Anteile, Wasserdampf sowie gegebenenfalls entstehende gasförmige Reaktionsprodukte laufend abpumpt, und anschließend den Sauerstoffpartialdruck gesteuert und schonend auf den Wert der normalen Umgebungsluft anhebt. Hierdurch können nicht nur die elektrischen Eigenschaften, sondern überraschenderweise auch die Schüttdichte gezielt eingestellt werden.

Zur Durchführung des erfindungsgemäßen Verfahrens wird Zinkpulver der gewünschten und für Batterien erforderlichen Teilchengrößenverteilung in ein Mischgefäß gegeben, dessen Mantel auf Temperaturen zwischen 20 und 200 °C erwärmt werden kann. Das Mischgefäß wird mit Gas gespült oder aber es wird evakuiert, so daß der Sauerstoffpartialdruck weniger als 100, insbesondere weniger als 20 mbar beträgt. Unter Rühren wird aus geeigneten Vorratsbehältern die für das Amalgamieren erforderliche Menge metallischen Quecksilbers sowie die erforderliche Menge der Amalgamierhilfe zugegeben.

Als Amalgamierhilfen kommen prinzipiell alle Substanzen infrage, die geeignet sind, die oberflächliche Oxidschicht des Zinkpulvers partiell oder ganz zu lösen und die Bildung einer Oxidschicht auf den Quecksilbertröpfchen zu verhinden. Geeignet sind somit Gase, ihre Lösungen — insbesondere wässrigen Lösungen sowie verdünnte wässrige Säuren und verdünnte wässrige Laugen. Bevorzugt werden solche Substanzen, deren Überschuß sowie Reaktionsprodukte mit dem Zinkpulver im Endprodukt verbleiben können oder leicht entfernbar sind. Die Entfernung kann prinzipiell durch Auswaschen erfolgen. Besonders bevorzugt sind solche Amalgamierhilfen, deren Überschuß und/oder Reaktionsprodukte durch einen Gasstrom aus dem Mischsystem ausgetragen werden können, so daß man auf den Schritt der nachträglichen Auswaschung verzichten kann. Typische Beispiele für bevorzugte Amalgamierhilfen sind somit Natronlauge, Kalilauge, Salzsäure, Essigsäure, Ameisensäure, Kohlensäure, Ammoniak sowie Stickstoff und Edelgase. Die Menge an Amalgamierhilfen muß ausreichen, die Oxidbelegung des metallischen Quecksilbers zu verhindern und die Oberfläche der Zinkpulverteilchen so zu benetzen, daß die vorhandene Oxidbelegung partiell angegriffen wird und somit das Quecksilber ungehindert eindringen kann.

Während des Mischvorgangs wird das Mischgefäß entweder ständig weiter evakuiert oder der Strom des Schutzgases so reguliert, daß der niedrige Sauerstoffpartialdruck eingehalten wird. Hierdurch werden gleichzeitig der Überschuß sowie die flüchtigen Anteile der Amalgamierhilfen, Wasserdampf sowie ggf. entstehende gasförmige Reaktionsprodukte laufend entfernt. Nach Zugabe der Amalgamierhilfe und des Quecksilbers und vollständiger Amalgamierung des Zinkpulvers wird der Sauerstoffpartialdruck im System gesteuert und schonend bis auf den Wert der normalen Umgebungsluft erhöht. Je nach Geschwindigkeit der Sauerstoffpartialdruckerhöhung und nach Temperatur des Zinkpulvers erfolgt eine mehr oder weniger starke oberfläche oberflächliche Oxidation des Zinkpulvers. Durch die langsame und gesteuerte Partialdruckerhöhung lassen sich nicht nur optimale elektrische Eigenschaften erzielen, sondern obendrein erstaunlicherweise die Schüttdichte des Pulvers gezielt einstellen. Dies ist von besonderer Bedeutung, da für verschiedene Typen von Batterien verschiedene Schüttdichten gefordert werden. Bei der gezielten Reoxidation ist zu beachten, daß hierbei Wärme entsteht, die zur vollständigen Trocknung des Zinkpulvers beiträgt. Nach Abschluß der kontrollierten Oxidation und vollständigen Entfernung des Überschusses der Amalgamierhilfen kann das Pulver aus dem Mischgefäß entnommen werden und ohne Schwierigkeiten gelagert, transportiert und in Batterien eingesetzt werden.

Ein besonderer Vorteil des erfindungsgemäßen Verfahrens besteht darin, daß das Quecksilber erst nach der Pulverisierung des Zinks eingebracht wird, so daß nur die jeweils gewünschte Kornfraktion amalgamiert wird. Bei der Verdüsung einer Zinkamalgamschmelze entsteht ein erheblicher Anteil Fehlkorn, der nur aufwendig wiedergewonnen werden kann und das Verfahren kostenmäßig erheblich belastet.

Bei dem erfindungsgemäßen Verfahren dringt weiterhin das Quecksilber durch die Oberfläche des Pulvers in die Pulverteilchen ein und verteilt sich hierin durch Diffusion. Dies hat zur Folge, daß die Quecksilberaufnahme proportional zur spezifischen Oberfläche des Pulverteilchens zunimmt, kleinere Teilchen haben folglich entsprechend der größeren Oberfläche und ihres erhöhten Beitrags zur Gasung mehr Quecksilber zur Verfügung zur Passivierung von Verunreinigungen an der Oberfläche als größere Teilchen.

Durch die Aufnahme des Quecksilbers durch die Oberfläche ergibt sich anfänglich eine stärkere Belegung der Oberfläche mit Quecksilber, d. h. genau dort, wo das Quecksilber wirklich benötigt wird. Durch den Einsatz von Amalgamierhilfen wird dieser Effekt verstärkt, da Amalgamierhilfen bevorzugt dort angreifen, wo sich Verunreinigungen befinden. Die Diffusion des Quecksilbers in die Pulverteilchen stellt sicher, daß auch im Inneren der Quecksilbergehalt zur Verhinderung der Gasentwicklung ausreicht. Beim Abbau der Zinkpulverteilchen, der durch die elektrische Entladung der Batterie bewirkt wird, wird das Quecksilber nicht angegriffen, so daß sich nach Auflösung des Zinks die Quecksilberkonzentration der Zinkpulverteilchen erhöht.

Mittels Amalgamieren in Schutzgasatmosphäre oder im Vakuum ist es möglich, Amalgamierhilfen einzusetzen und deren Überschuß, sowie flüchtige Bestandteile, Wasserdampf und ffg. gasförmige Reaktionsprodukte in einem Arbeitsgang gemeinsam zu entfernen. Dadurch kann das aufwendige Auswaschen und Trocknen des Pulvers nach dem Amalgamieren entfallen.

Die Oxidation des Zinkpulvers kann beispielsweise durch Luftzufuhr oder Erhöhung des Sauerstoffpartialdruckes so gesteuert werden, daß sich im Batterie-Zinkpulver Zinkoxidgehalte von 0,6 bis 10 % stufenlos einstellen lassen, so daß auch der Zinkoxidgehalt des Zinkpulvers vor der Amalgamierung wieder eingestellt werden kann.

Amalgamieren in einem geschlossenen evakuierbaren Mischgefäß bedingt eine Minimierung von Umweltschutzmaßnahmen. Es entfällt daher die Entfernung von Quecksilber aus der Prozeßluft wie beim Verdüsen einer Quecksilber-Zink-Schmelze sowie der Anfall von Quecksilber in der Prozeßluft eines Trockners beim Amalgamieren unter wässrigen Laugen und Säuren.

Ein weiterer besonderer Vorteil des erfindungsgemäßen Verfahrens besteht darin, daß überraschenderweise durch Einstellung des Oxidationsgrades auch das Schüttgewicht eingestellt werden kann. Es war bisher nicht bekannt, daß derartig in erheblichem Maße Einfluß auf die Schüttdichte des endgültigen Pulvers genommen werden kann.

Es ist weiterhin bekannt, daß die Gasentwicklung von Zinkpulver durch den Zusatz von bestimmten Legierungselementen verringert werden kann. So ist bekannt, daß sowohl reines Zinkpulver als auch quecksilberhaltiges Zinkpulver eine geringfügig geringere Gasentwicklung zeigt, wenn das Zink einen Bleigehalt von 0,05 Gew.- % aufweist. Eine Erklärung für diese Beobachtung ist bisher nicht bekannt. So kann z.

B. die Gasentwicklung eines reinen Zinkpulvers doppelt so groß sein wie die eines identisch hergestellten Zinkpulvers, dem vor der Pulverisierung Blei zur Erzielung von 0,05 Gew.- % Quecksilber zugesetzt wurde. Weiterhin kann z. B. die Gasentwicklung eines 6 Gew.- % haltigen Zinkpulvers um etwa 20 % größer sein als die eines identisch hergestellten Zinkpulvers, das vor der Pulverisierung mit 0,05 Gew.- % Blei legiert wurde. Andere Legierungselemente zeigen ähnliche Wirkungen.

Es wurde jetzt überraschenderweise gefunden, daß die Gasentwicklung erheblich stärker verringert wird, wenn die Legierungselemente nicht von vornherein dem Zink zugesetzt werden, sondern das Zinkpulver mit metallischem Quecksilber amalgamiert wird, welches einen Teil oder die ganze Menge der Legierungselemente gelöst enthält. So zeigt sich z. B., daß die Gasentwicklung eines Zinkpulvers das mit einem Blei-Quecksilber-Amalgam behandelt wurde, so daß es 6 Gew.- % Quecksilber und 0,05 Gew.- % Blei enthält, um 60 % geringer liegt als die eines identisch hergestellten Pulvers aus einer Zink-Blei-Legierung, mit 0,05 Gew.- % Blei, welches nachträglich auf 6 Gew.- % Quecksilber amalgamiert wurde. Diese erhebliche Verbesserung der Eigenschaft von Zinkpulver für alkalische Batterien war nicht vorherzusehen.

Eine bevorzugte Ausführungsform der vorliegenden Erfindung ist somit ein Verfahren, das dadurch gekennzeichnet ist, daß man das Zinkpulver mit metallischem Quecksilber umsetzt, welches einen Teil oder die gesamte Menge zusätzlicher Legierungselemente zur Verringerung der Gasentwicklung in Lösung enthält. Bei den Legierungselementen kann es sich um eines oder mehrere aus der Reihe Gold, Silber, Zinn, Blei, Cadmium, Indium, Thallium, Gallium und Zink handeln.

Zur Durchführung dieser erfindungsgemäßen Verfahrensvariante wird somit ein Zinkpulver eingesetzt, welches keine Gehalte oder nur einen Teil der gewünschten Gehalte der genannten Legierungselemente enthält. Die Umsetzung mit metallischem Quecksilber, in dem alles oder der verbleibende Rest der Menge der gewünschten Legierungselemente gelöst ist, erfolgt in üblicher Weise.

Bevorzugte Legierungselemente sind Blei und Blei mit Zink.

Metallisches Quecksilber mit einem Gehalt von 0,1 bis 2 Gew.- % Blei kann relativ einfach hergestellt werden, da Blei sich in flüssigem Quecksilber in der Wärme wesentlich besser löst als bei Raumtemperatur. Bereits bei 100 °C können bis zu 15 Gew.- % Blei in Quecksilber gelöst werden. Da das Amalgamieren von Zinkpulver im allgemeinen bei Temperaturen zwischen Raumtemperatur und 150 °C erfolgt, ist es ohne weiteres möglich, metallisches Quecksilber mit einem Bleigehalt bis zu 2 Gew.- % herzustellen und erfindungsgemäß einzusetzen.

In den nachfolgenden Beispielen ist das erfindungsgemäße Verfahren näher erläutert:

## Beispiel 1

4,7 kg Zinkpulver werden in ein Mischgefäß eingebracht, in dem durch Argonspülung ein Sauerstoffpartialdruck von 20 mbar eingestellt wird. Der Doppelmantel des Mischgefäßes wird auf 90 °C erwärmt. Nach dem Temperaturausgleich zwischen Zinkpulver und Mischsystem wird der Mischer eingeschaltet und das Zinkpulver gründlich durchmischt. Aus einem angeschlossenen Gefäß werden 0,6 l 1 %ige wässrige Kaliumhydroxidlösung eingetragen, so daß sie mit dem Zinkpulver gründlich vermischt wird. Anschließend werden 0,3 kg Quecksilber eingetragen und ebenfalls mit dem Zinkpulver vermischt. Das Mischen wird so lange durchgeführt, bis das Zinkpulver fertig amalgamiert ist und die mit dem Amalgamierhilfsmittel eingetragenen Gehalte an Wasser durch die Argonspülung aus dem Gefäß ausgetragen worden sind. Durch kontrollierte Erhöhung des Partialdruckes des Sauerstoffes im Mischgefäß bis auf den Wert der Umgebungsluft lassen sich Zinkoxidgehalte zwischen 0,6 und 10 % einstellen. Mit zunehmendem Oxidgehalt steigt auch die Schüttdichte des fertig amalgamierten Zinkpulvers.

Die Ausgangsschüttdichte des Zinkpulvers betrug 2,7 kg/l. Bei einer Versuchsführung, die zu einem Gehalt von 1 Gew.-% Zinkoxid im Pulver führt, weist dieses eine Schüttdichte von 2,95 kg/l auf.

## Beispiel 2

In analoger Weise wie im Beispiel 1 wurde durch andere Geschwindigkeit der Erhöhung des Sauerstoffpartialdruckes ein Gehalt von 1,5 Gew.-% Zinkoxid im Zinkpulver erreicht. Das Pulver zeigte nach dem Amalgamieren eine Schüttdichte von 3,2 kg/l.

## Beispiel 3

In analoger Weise wie im Beispiel 1 wurde der Partialdruck des Sauerstoffs so erhöht, daß ein Oxidgehalt von 3 Gew.-% Zinkoxid erhalten wurde. Das Pulver zeigte nach dem Amalgamieren eine Schüttdichte von 3,6 g/cm$^3$.

Durch die Quecksilberaufnahme allein ergibt sich in allen drei Beispielen rechnerisch eine Schüttdichte von nur 2,85 g/cm$^3$.

## Beispiel 4

4,7 kg Zinkpulver werden in ein geschlossenes Mischgefäß eingebracht. Durch Spülung mit Argongas wird der Sauerstoffpartialdruck im System auf unter 60 mbar reduziert. Der Doppelmantel des Mischgefäßes wird auf 90 °C erwärmt. Nach dem Erreichen des Temperaturausgleichs zwischen Mischgefäß und Zinkpulver wird das Rührwerk eingeschaltet und das Zinkpulver gründlich durchmischt. Während des Mischens wird aus einem angeschlossenen Behälter 0,6 l 1 % KOH-Lösung eingetragen, so daß sie mit dem Zinkpulver gründlich vermischt wird. Unter ständigem Rühren wird nun aus einem angeschlossenen Behälter 0,3 kg metallisches Quecksilber mit einem Bleigehalt von 0,83 Gew.-% eingetragen. Der Mischvorgang wird so lange durchgeführt, bis das Zinkpulver fertig amalgamiert ist und die mit dem Amalgamierhilfsmittel eingetragene Feuchtigkeit mit dem Argonstrom aus dem Mischgefäß entfernt worden ist. Daran anschließend wird zum Argon Sauerstoff dosiert, bis der der normalen Umgebungsluft entsprechende Partialdruck erreicht ist. Je nach Geschwindigkeit der Zugabe sowie der Temperatur des Zinkpulvers lassen sich Gehalte von 0,6 bis 10 Gew.-% ZnO im Zinkpulver einstellen. Mit zunehmendem Oxidgehalt steigt auch die Schüttdichte des fertig amalgamierten Zinkpulvers. Der Gasungstest des fertigen Pulvers ergab einen Wert $V_g = 0,08$ ml/g und Stunde. Analoge Werte wurden erhalten bei Verwendung eines Quecksilbers, das außer 0,83 Gew.-% Blei 0,05 Gew.-% Zink enthielt.

## Vergleichsversuch 1

In analoger Weise wie in Beispiel 4 beschrieben wurde ein Zinkpulver hergestellt, bei dem jedoch das Zinkpulver bereits 0,05 Gew.-% Blei enthielt. Das metallische Quecksilber hingegen war bleifrei. Der Gasungstest des so erhaltenen Pulvers ergab einen Wert von $V_g = 0,16$ ml/g und Stunde.

## Vergleichsversuch 2

Bei Wiederholung des Beispiels 4 mit reinem Zinkpulver und bleifreiem Quecksilber erhielt man ein Zinkpulver, welches beim Gasungstest den Wert von $V_g = 2$ ml/g und Stunde zeigte.

## Patentansprüche

1. Verfahren zur Herstellung von Zinkpulver mit einem Quecksilbergehalt von 0,1 bis 10 Gew.-% für alkalische Batterien durch Amalgamieren von Zinkpulver mit metallischem Quecksilber und Amalgamierhilfen, dadurch gekennzeichnet, daß man

a. das Zinkpulver unter Rühren in einem geschlossenen System, in dem der Sauerstoffpartialdruck kleiner als 100 mbar, vorzugsweise kleiner als 20 mbar ist, mit Amalgamierhilfen und metallischem Quecksilber reagieren läßt,

b. den Überschuß an Amalgamierhilfen, ihre flüchtigen Anteile, Wasserdampf sowie gegebenenfalls entstehende gasförmige Reaktionsprodukte laufend abpumpt, und anschließend

c. den Sauerstoffpartialdruck gesteuert und schonend auf den Wert der normalen Umgebungsluft anhebt.

2. Verfahren gemäß Anspruch 1, dadurch gekennzeichnet, daß als Amalgamierhilfen Gase, ihre Lösungen, insbesondere verdünnte wässrige Lösungen, verdünnte wässrige Säuren, verdünnte wässrige Laugen, verwendet werden, deren Verbleib im Zinkpulver zu keiner störenden Reaktion in der alkalischen Batterie führt.

3. Verfahren gemäß Anspruch 1, dadurch gekennzeichnet, daß als Amalgamierhilfe Kaliumhydroxid, Ammoniak und/oder Kohlensäure eingesetzt wird.

4. Verfahren gemäß Anspruch 1, dadurch gekennzeichnet, daß die Schüttdichte des fertigen Pulvers durch die Steuerung der Erhöung des Sauerstoffpartialdruckes gezielt eingestellt wird.

5. Verfahren gemäß einem der Ansprüche 1 bis 4, dadurch gekennzeichnet, daß man das Zinkpulver mit metallischem Quecksilber umsetzt, welches einen Teil oder die gesamte Menge zusätzlicher Legierungselemente zur Verringerung der Gasentwicklung in Lösung enthält.

6. Verfahren gemäß Anspruch 5, dadurch gekennzeichnet, daß man als Legierungselemente eines oder mehrere Elemente der Reihe Gold, Silber, Zinn, Blei, Cadmium, Indium, Thallium, Gallium und Zink einsetzt.

## Claims

1. A process for preparing a zinc powder having a mercury content of from 0.1 to 10 % by weight for alkaline batteries by amalgamating zinc powder with metallic mercury and amalgamating aids, characterized in that

a. the zinc powder is allowed to react with amalgamating aids and metallic mercury while being stirred in a closed system wherein the oxygen partial pressure is less than 100 mbar, and preferably less than 20 mbar ;

b. the excess of amalgamating aids, their volatile proportions, water vapor and gaseous reaction products — if formed — are continuously removed by pumping ; and

c. the oxygen partial pressure is controlledly and mildly increased to the value of regular environmental air.

2. The process according to claim 1, characterized in that as the amalgamating aids there are used gases, solutions thereof, more specifically diluted aqueous solutions, diluted aqueous acids, diluted aqueous lyes, the retention of which materials in the zinc powders would not cause any interfering reaction to occur in the alkaline battery.

3. The process according to claim 1, characterized in that as the amalgamating aids there are used potassium hydroxide, ammonia and/or carbonic acid.

4. The process according to claim 1, characterized in that the bulk density of the finished powder is adjusted by controlling the increase of the oxygen partial pressure.

5. The process according to any one of claims 1 to 4, characterized in that the zinc powder is reacted with metallic mercury which contains part or the entire amount of additional alloying elements for reducing the gas evolution in the solution.

6. The process according to claim 5, characterized in that as the alloying elements one or more elements selected from the series comprising gold, silver, tin, lead, cadmium, indium, thallium, gallium and zinc are used.

## Revendications

1. Procédé d'obtention de poudre de zinc pour batteries alcalines avec une teneur en mercure de 0,1 à 10 % en poids par formation d'un amalgame de poudre de zinc avec du mercure métallique et un adjuvant de formation d'amalgame, caractérisé en ce que :

a. on fait réagir la poudre de zinc avec l'adjuvant de formation d'amalgame et le mercure métallique, sous agitation, dans un système fermé dans lequel la pression partielle d'oxygène est inférieure à 100 mbar, de préférence inférieure à 20 mbar ;

b. on extrait par pompage, de façon continue, l'excès d'adjuvant de formation d'amalgame, ses fractions volatiles, de la vapeur d'eau, ainsi que les produits de réaction gazeux qui se dégagent éventuellement, et ensuite ;

c. on élève la pression partielle d'oxygène de façon contrôlée et ménagée jusqu'au niveau de l'air environnant.

2. Procédé selon la revendication 1, caractérisé en ce qu'on utilise, comme adjuvant de formation d'amalgame des gaz, ou leurs solutions, notamment des solutions aqueuses diluées, des solutions aqueuses acides diluées, des solutions aqueuses basiques diluées, dont la subsistance dans la poudre de zinc ne conduit à aucune réaction perturbatrice dans la batterie alcaline.

3. Procédé selon la revendication 1, caractérisé en ce qu'on utilise comme adjuvant de formation d'amalgame l'hydroxyde de potassium, l'ammoniac et/ou des acides organiques.

4. Procédé selon la revendication 1, caractérisé en ce qu'on obtient la densité apparente désirée de la poudre terminée par le contrôle de la montée de la pression partielle d'oxygène.

5. Procédé selon l'une des revendications 1 à 4, caractérisé en ce qu'on fait réagir la poudre de zinc avec du mercure métallique qui contient en solution une partie ou la totalité d'éléments d'alliage additionnels destinés à réduire le dégagement gazeux.

6. Procédé selon la revendication 5, caractérisé en ce que, comme éléments d'alliage, on introduit un ou plusieurs éléments de la famille de l'or, l'argent, l'étain, le plomb, le cadmium, l'indium, le thallium, le gallium et le zinc.